**Europäisches Patentamt**

**European Patent Office**

**Office européen des brevets**

(19)

(11) Veröffentlichungsnummer : **0 474 913 B1**

(12) **EUROPÄISCHE PATENTSCHRIFT**

(45) Veröffentlichungstag der Patentschrift :
06.05.92 Patentblatt 92/19

(51) Int. Cl.⁵ : **B21D 51/42**

(21) Anmeldenummer : **90117732.9**

(22) Anmeldetag : **14.09.90**

(54) **Wasserkessel und Verfahren zur Befestigung eines Ausgusses.**

(43) Veröffentlichungstag der Anmeldung :
**18.03.92 Patentblatt 92/12**

(45) Bekanntmachung des Hinweises auf die
Patenterteilung :
**06.05.92 Patentblatt 92/19**

(84) Benannte Vertragsstaaten :
**BE CH DE DK FR GB GR IT LI NL**

(56) Entgegenhaltungen :
**CH-A- 138 946**
**GB-A- 857 947**
**US-A- 2 905 124**

(73) Patentinhaber : **Vandaele, Stephan**
**Zeedijk het Zoute 8431**
**B-8300 Knokke-Heist (BE)**

(72) Erfinder : **Vandaele, Stephan**
**Zeedijk het Zoute 8431**
**B-8300 Knokke-Heist (BE)**

(74) Vertreter : **Hassler, Werner, Dr.**
**Postfach 17 04 Asenberg 62**
**W-5880 Lüdenscheid (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Wasserkessel mit tiefgezogener Ausgußtülle aus Blech, dessen Ausgußtülle durch eine Falzverbindung in einer Ausgußöffnung des Kesselkörpers gehalten ist.

Bei einer Falzverbindung der genannten Art befindet sich der Falzrand in dem Mantel der Ausgußtülle. Die Ausgußtülle ist ein Tiefziehteil, so daß das Material wegen des großen Tiefziehverhältnisse sehr hart und spröde ist, besonders bei einer Ausgußtülle aus Edelstahl. Damit das Falzen des Falzrandes rißfrei durchgeführt werden kann, ist ein Weichglühen der Ausgußtülle vor dem Falzen erforderlich. Das Ausglühen muß unter Vakuum erfolgen, um ein Oxidieren des Metallblechs zu verhindern. Infolgedessen ist diese Arbeitsweise sehr aufwendig und kostenträchtig.

Aufgabe der Erfindung ist die Ausbildung einer rißfreien Falzverbindung ohne eine Glühbehandlung.

Diese Aufgabe wird nach der Erfindung dadurch gelöst, daß bei einem Wasserhessel nach dem Oberbegriff des Anspruchs 1 ein in radialer Richtung nach außen gerichteter Verbindungsrand der Ausgußtülle in einen Falzrand des Kesselkörpers eingefalzt ist.

Die Erfindung unterscheidet sich vom Stand der Technik durch eine neue Gestaltung der Falzverbindung. Die Ausgußtülle wird stirnseitig zur Ausbildung des Verbindungsrandes nur geringfügig verformt, so daß keine Rißbildung auftritt. Der Falzrand selbst wird in dem Wasserkesselkörper ausgebildet, Der Wasserkesselkörper ist formbar genug, um eine rißfreie Falzverbindung zu gewährleisten.

Einen stetigen und gleichmäßigen Abschluß der Falzverbindung erzielt man dadurch, daß der Falzrand des Kesselkörpers den Verbindungsrand in Form einer U-förmigen Falzrinne umschließt.

Eine optisch vorteilhafte Lösung erzielt man dadurch, daß der Falzrand im Inneren des Kesselkörpers angeordnet ist.

Ein Verfahren zur Befestigung einer Ausgußtülle in dem Wasserkesselkörper eines Wasserkessels zeichnet sich dadurch aus, daß um eine Ausgußöffnung des Kesselkörpers eine Falzstufe eingetieft wird, daß in diese Falzstufe ein radialer Verbindungsrand der Ausgußtülle eingelegt wird und daß die Seitenwand der Falzstufe über den Verbindungsrand gefalzt wird, so daß der Verbindungsrand der Ausgußtülle von einer U-förmige Falzrinne des Wasserkesselkörpers umschlosssen ist.

Eine Ausführungsform der Erfindung wird im Folgenden anhand der Zeichnung erläutert, in der darstellen:

Fig. 1 eine schematische Darstellung eines Wasserkessels,

Fig. 2 eine vergrößerte Einzeldarstellung vor Fertigstellung der Falzverbindung und

Fig. 3 eine Darstellung der fertigen Falzverbindung.

Der Wasserkessel 1 besteht z.B. aus Edelstahl und weist einen zylindrischen Wasserkesselkörper 2 mit einer oberen Kegelwand 3 auf. Der Boden 4 ist für eine direkte oder indirekte Beheizung ausgebildet. Eine Ausgußtülle 6 besteht ebenfalls aus Edelstahl. Ein Griff 5 aus Kunststoff oder Metall ermöglicht eine Handhabung des Wasserkessels 1.

Die Ausgußtülle 6 ist ein Tiefziehteil und wegen des großen Tiefziehverhältnisses vergleichsweise hart und spröde. An der Ausgußtülle ist ein in radialer Richtung nach außen gerichteter Verbindungsrand 7 angeformt. Diese Formung ist ohne Rißbildung möglich. Am Ausgießende befindet sich eine Umbördelung 8.

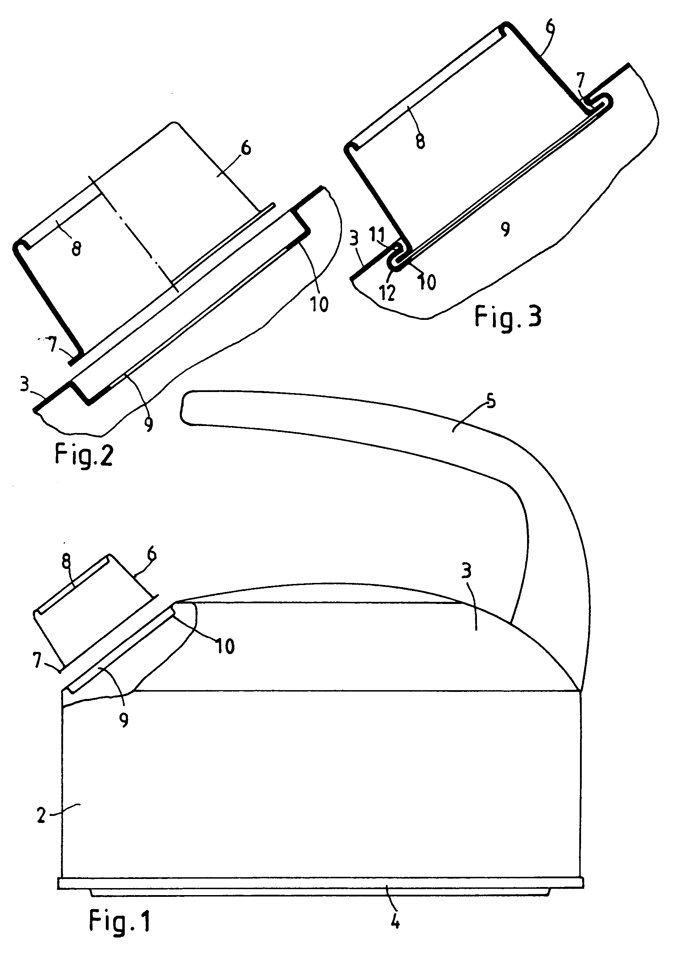

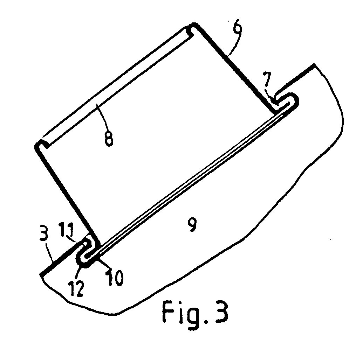

Der Kesselkörper 2 weist eine Ausgußöffnung 9 auf. Am Umfang derselben ist eine nach innen abgesetzte ringförmigen Falzstufe 10 ausgebildet. Dieses ist in Einzelheiten in Fig. 2 dargestellt. Es wird ausdrücklich darauf verwiesen, daß die Darstellung der Ausgußöffnung 9 innerhalb des Kesselkörpers bzw. der Kegelwand 3 nicht maßstäblich ist. In die Falzstufe 10 wird der Verbindungsrand 7 der Ausgußtülle 6 eingesetzt. Dann erfolgt die Ausbildung des Falzrandes 11 gemäß Fig. 3, der als U-förmige Falzrinne 12 den Verbindungsrand 10 umfaßt.

Diese Falzverbindung ist rißfrei und dicht. Sie bietet auch einen guten optischen Abschluß, da sie sich im Inneren des Kesselkörpers befindet. Die Falzstufe 10 ist im Vergleich zu der Ausgußtülle wesentlich weicher, da das Tiefziehverhältnis und damit die Verhärtung erheblich geringer ist. Dadurch läßt sich das Material des weichen Kesselkörpers ohne Rißbildung zu dem Falzrand verformen.

**Patentansprüche**

1. Wasserkessel (1) mit tiefgezogener Ausgußtülle (6) aus Blech, dessen Ausgußtülle (6) durch eine Falzverbindung in einer Ausgußöffnung (9) des Kesselkörpers (2) gehalten ist, dadurch gekennzeichnet, daß ein in radialer Richtung nach außen gerichteter Verbindungsrand (7) der Ausgußtülle (6) in einen Falzrand (11) des Kesselkörpers (2) eingefalzt ist.

2. Wasserkessel nach Anspruch 1, dadurch gekennzeichnet, daß der Falzrand (11) des Kesselkörpers (2) den Verbindungsrand (7) in Form einer U-förmigen Falzrinne (12) umschließt.

3. Wasserkessel nach Anspruch 2, dadurch gekennzeichnet, daß der Falzrand (11) im Inneren des Kesselkörpers (2) angeordnet ist.

4. Verfahren zur Befestigung einer tiefgezogener Ausgußtülle (6) in dem Kesselkörper (2) eines Wasserkessels (1) nach einem der Ansprüche 1 bis 3, dadurch gekennzeichnet, daß um eine Ausgußöffnung (9) des Kesselkörpers (2) eine Falzstufe (10) eingetieft wird, daß in diese Falzstufe (10) ein radialer Verbindungsrand (7) der Ausgußtülle (6) eingelegt wird und daß die Seitenwand der Falzstufe (10) über den Verbindungsrand (7) gefalzt wird, so daß der Verbindungsrand (7) der Ausgußtülle (6) von einer U-förmige Falzrinne (12) der Wasserkesselkörpers (2) umschlosssen ist.

## Claims

1. Water kettle (1) with a deep-drawn spout sleeve (6) made of sheet metal, whereof the spout sleeve (6) is held by a fold connection in a spout opening (9) of the kettle body (2), characterized in that a connection edge (7), directed outward in the radial direction, of the spout sleeve (6) is enclosed in fold-like manner by a fold edge (11) of the kettle body (2).

2. Water kettle according to Claim 1, characterized in that the fold edge (11) of the kettle body (2) encloses the connection edge (7) in the form of a U-shaped fold groove (12).

3. Water kettle according to Claim 2, characterized in that the fold edge (11) is arranged in the interior of the kettle body (2).

4. Process for attaching a deep-drawn spout sleeve (6) in the kettle body (2) of a water kettle (1) according to one of Claims 1 to 3, characterized in that a fold step (10) is sunk in around a spout opening (9) of the kettle body (2), in that there is placed in said fold step (10) a radial connection edge (7) of the spout sleeve (6), and in that the side wall of the fold step (10) is folded over the connection edge (7), so that the connection edge (7) of the spout sleeve (6) is enclosed by a U-shaped fold groove (12) of the water kettle body (2).

## Revendications

1. Bouilloire (1), comportant un bec-verseur embouti (6) en tôle, dont le bec-verseur (6) est maintenu par une liaison par sertissage dans une ouverture d'écoulement (9) du corps de bouilloire (2), caractérisée en ce qu'un bord de liaison (7), du bec-verseur (6), est serti dans un rebord de sertissage (11) du corps de bouilloire (2).

2. Bouilloire suivant la revendication 1, caractérisée en ce que le rebord de sertissage (11) du corps de bouilloire (2) entoure le bord de liaison (7) dans une forme d'une goulotte pliée en forme de U.

3. Bouilloire suivant la revendication 2, caractérisée en ce que le rebord de sertissage (11) est agencé à l'intérieur du corps de bouilloire (2).

4. Procédé de fixation d'un bec-verseur embouti (6) dans le corps (2) d'une bouilloire (1) suivant l'une quelconque des revendications 1 à 3, caractérisé en ce qu'un gradin de sertissage (10) est embouti autour d'une ouverture d'écoulement (9) du corps de bouilloire (2), en ce qu'un bord de liaison radial (7) du bec-verseur (6) est inséré dans ce gradin de sertissage (10) et en ce que la paroi latérale du gradin de sertissage (10) est pliée sur le bord de liaison (7) de façon que le bord de liaison (7) du bec-verseur (6) soit entouré par une goulotte de sertissage en forme de U (12) du corps de bouilloire (2).

Fig.2

Fig. 3

Fig. 1

Fig. 3